# EUROPÄISCHE PATENTSCHRIFT

(11) **EP 3 041 989 B1**
(45) Veröffentlichungstag und Bekanntmachung des Hinweises auf die Patenterteilung: **02.10.2019**
(21) Anmeldenummer: 14758337.1
(22) Anmeldetag: 27.08.2014
(51) Int. Cl.: D21H 13/50, H01M 8/18, H01M 4/66, C25B 11/12, H01M 4/38, H01M 4/80, H01M 10/052, H01M 10/054, H01M 4/96, H01M 12/06, H01M 12/08, C01B 32/05, C01B 32/20, H01M 4/04, H01M 8/16, H01M 4/62, H01M 4/86, H01M 8/0234, H01M 8/0243

(54) **ELEKTRODENSUBSTRAT AUS KOHLENSTOFFFASERN**
ELECTRODE SUBSTRATE MADE OF CARBON FIBERS
SUBSTRAT D'ÉLECTRODE CONSTITUÉ DE FIBRES DE CARBONE

(30) Priorität: 06.09.2013 DE 102013217882
(43) Veröffentlichungstag der Anmeldung: 13.07.2016
(73) Patentinhaber: SGL Carbon SE, 65201 Wiesbaden (DE)
(72) Erfinder: SCHWEISS, Rüdiger-Bernd, 86405 Meitingen (DE)
(86) Internationale Anmeldenummer: PCT/EP2014/068148
(87) Internationale Veröffentlichungsnummer: WO 2015/032667

(56) Entgegenhaltungen:
- EP-A1- 1 788 651
- JP-A- 2004 214 072
- JP-A- 2005 302 558
- US-A1- 2003 194 557

## Beschreibung

Die Erfindung betrifft ein Elektrodensubstrat aus Kohlenstofffasern, insbesondere für Redox Flow Batterien, regenerative Brennstoffzellen, Polymerelektrolyt-Brennstoffzellen, Metall-Luft-Batterien, Lithium-Schwefelbatterien oder Zink-Brom-Batterien sowie Verfahren zu ihrer Herstellung.

Redox Flow Batterien und regenerative (oder reversible) Brennstoffzellen sind elektrochemische Energiespeicher, welche wässrige oder organische Lösungen von Metallionen und Übergangsmetallionen bzw. jeweils entsprechenden Komplexen wie z.B. von Eisen, Cer, Chrom, Zink, Titan, Vanadium oder auch Redoxsysteme auf Basis von Lösungen von Halogenen (beispielsweise Bromid und/oder Chlorid) oder Polysulfiden als Aktivmassen zur Ladungsspeicherung aufweisen. Diese werden in externen Tanks gespeichert und beim Betrieb der Batterie durch einen elektrochemischen Reaktor aus zwei Halbzellen gepumpt, welche durch eine ionenleitende Membran oder einen mikroporösen Separator getrennt sind.

In den Halbzellen sind jeweils poröse Durchflusselektroden angeordnet, welche durch die Lösungen der Aktivmaterialien durchströmt werden.

Beim Lade- bzw. Entladevorgang werden die entsprechenden Redoxpaare in den Halbzellen an porösen Durchflusselektroden (Kohlenstoff-Filz oder Kohlenstoffschaum, Metallschäume) oxidiert bzw. reduziert. Durch die externe Speicherung der Aktivmassen und die Energieumwandlung in einem Reaktor (Zelle) wird eine unabhängige Dimensionierung von Energie und Leistung des Batteriesystems ermöglicht.

Eine Brennstoffzelle wandelt ähnlich zu Redox Flow Batterie von außen zugeführten Brennstoff wie Wasserstoff oder niedere Alkohole/Ether und ein Oxidationsmittel, in der Regel Sauerstoff oder Luft, durch elektrochemische Reaktionen in Elektrizität, Reaktionsprodukte und Überschusswärme um.

Für Brennstoffzellen und Redox Flow Batterien werden aufgrund der geringen Zellpotentiale mehrere Einzelzellen üblicherweise zu einem Zellstapel zusammengesetzt, um die Spannung und die Leistungsabgabe zu erhöhen. Es existieren ferner auch Mischformen, wie z.B. eine Vanadium-Luft-Brennstoffzelle, bei welcher die negative Elektrode aus einer Vanadiumsalzlösung in einer porösen Durchflusselektrode besteht und die positive Elektrode (Kathode) als Gasdiffusionselektrode analog zu einer klassischen Brennstoffzellenkathode ausgeführt ist.

Metall-Luft Batterien kombinieren eine Anode aus einem elektropositiven Metall (Lithium, Zink) mit dem Redoxpartner Sauerstoff, welche an einer Kathode in Form einer kohlenstoff- oder metallbasierten Gasdiffusionselektrode elektrochemisch zu Wasser oder Hydroxidionen reagiert. Gasdiffusionselektroden sind in der Regel durch Imprägnierung mit Fluorpolymeren hydrophobiert und eine Dreiphasengrenze (fester Elektronenleiter/flüssige Phase/Gasphase), an der die elektrochemische Reaktion stattfinden kann, bereitzustellen.

Metall-Schwefelbatterien sind Sekundärbatterien, welche als negative Elektrode Lithium oder Natrium mit dem Redoxsystem Schwefel/Polysulfid als positive Elektrode kombinieren. Da das Aktivmaterial Schwefel kaum oder keinerlei elektrische Leitfähigkeit besitzt, wird dieser in eine poröse, pulverförmige Kohlenstoffmatrix (Lithium-Schwefel-Batterie) bzw. einen Kohlenstofffilz (Natrium-Schwefel-Batterie) eingebracht.

Um hohe Produktionsvolumina zu erreichen, ist es für jeden Elektrodenwerkstoff wünschenswert, dass das Elektrodensubstrat als Endlosrollenmaterial verarbeitet werden kann. Dies ermöglicht die Anwendung kostengünstiger Verfahren im industriellen Maßstab, z.B. zur Absetzung von eventuell benötigten Katalysatorschichten auf dem Substrat und für nachfolgende Fertigungsschritte wie z.B. die Laminierung auf einen Stromableiter. Ein Endlosrollen-Elektrodensubstrat bietet zudem höhere Homogenität und Einheitlichkeit des Produkts, verglichen mit dem im Chargenmodus produzierten Elektrodensubstrat.

Neben den bereits erörterten Anforderungen muss das Elektrodenmaterial in Bezug auf die Elektrolytmaterialien, Brennstoffe, Oxidationsmittel und Reaktions- bzw. Nebenprodukte inert sowie korrosionsstabil sein. Ferner muss die Flexibilität des Elektrodenmaterials ausreichen, um die Verarbeitung von Spule zu Spule als Rollenmaterial zu ermöglichen.

Nachteil von üblichen Elektrodenmaterialien für Redox Flow Batterien ist deren Dicke von 2 bis 5mm welcher einen relativ hohen elektrischen Widerstand und auch einen signifikanten hydrodynamischen Widerstand bei Durchströmung zufolge hat. Darüber hinaus sind diese Werkstoffe in der Regel unzureichend benetzbar für die Elektrolytlösungen und müssen vor dem Gebrauch z. T. durch thermische Behandlung oxidiert werden.

Ein neuer Ansatz bei Redox Flow Batterien besteht in der Ausführung der Batterie mit einem Stromableiter aus einer Graphitplatte mit Strömungskanälen kombiniert mit einer dünnen kohlenstofffaserbasierten Elektrode (D.S. Aaron et al., Journal of Power Sources, Band 206, 2012, 450- 453). Dieses Konzept erlaubt aufgrund der reduzierten ohmschen Widerstände eine deutlich höhere Leistungsdichte als die klassische Ausführung.

Bei Metall-Luft-Batterie werden bisher meistens Gasdiffusionselektroden durch Beschichtung einer Trägerstruktur (z.B. PTFE- oder Metallgewebe) mit Kohlenstoffpartikel hergestellt.

Positive Elektroden von Lithium-Schwefel-Akkumulatoren werden in der Regel als Pastenelektroden ausgeführt, bei denen eine Aufschlämmung von Kohlenstoff und Schwefelpartikeln auf eine metallbasierte Ableiterfolie beschichtet wird.

Aufgabe der Erfindung ist es daher, ein kostengünstiges und flexibles Herstellungsverfahren für dünne, faserbasierte und zusammenhängende Elektrodenstruktur zu finden, welche je nach Ausführungsform für Redox Flow Batterien, regenerative Brennstoffzellen, Metall-Luft, Metall-Schwefelbatterien oder auch Brennstoffzellen einsetzbar sind.

Das Verfahren soll es ermöglichen, im Zuge der Herstellung das Elektrodenmaterial durch Ausrüstung mit katalytisch aktiven Substanzen (Redox Flow Batterie, Metall-Luft-Batterie), Inhibitoren (Redox Flow Batterie) oder funktionalen, kohlenstoffbasierten Füllstoffen (Redox Flow Batterie, Lithium-Schwefelbatterie) auf die jeweilige Anwendung hin zu optimieren.

Zusätzlich sollen Materialien flexibel weiterverarbeitet werden können, z.B. durch Lamination mit einem Stromableiter in Form einer Platte oder Folie.

Katalytisch aktive Substanzen (z.B. Co, Ir, Pt, Bi, Mn, Te, In, Pd) beschleunigen die elektrochemischen Reaktionen an der Elektrode (z.B. Redoxreaktionen von Übergangsmetallionen, Metallionen und der Sauerstoffreduktion von Metall-Luft-Batterien) und erhöhen damit die Leistung der Batterie.

Eine durch die Füllstoffmatrix hervorgerufene, höhere spezifische Oberfläche der Elektrode bzw. Heteroatomdotierung (Sauerstoff, Stickstoff) der Kohlenstoffstruktur hat ähnlich positive Auswirkungen auf die elektrochemische Kinetik.

Inhibitoren (Partikel, Salze oder Oxide von Pb, Bi, Sn, Cd, Tl, In, Sb, Au) erhöhen die Ladungseffizienz von Redox Flow Batterien, da diese parasitäre Reaktionen wie die Wasserstoffbildung im Elektrolyten behindern (EP 0312875 A1).

Für eine optimale Effizienz einer Lithium-Schwefel-Batterie ist eine bestimmte Porenstruktur und ein definierter Porenraum erforderlich (Hagen et al., Journal of Power Sources, Band 224, 2013, 260-268). Dieser kann in dem Verfahren durch die Wahl der Füllstoffmatrix (Typ, Menge) maßgeschneidert werden.

JP 2004 214072 A beschreibt ein poröses Elektrodensubstrat umfassend ein Gebilde aus Kohlenstofffasern und einer Kohlenstoffmatrix, wobei die Kohlenstoffmatrix aktivierten Kohlenstoff in Form von aktivierten Kohlenstofffasern mit einer hohen spezifischen Oberfläche, deren Wert durch BET-Messung mehr als 1000 m²/g beträgt, und carbonisierten oder graphitierten Rückstand eines carbonisierbaren oder graphitierbaren Binders enthält, wobei die spezifische Oberfläche, Porosität und Porenverteilung durch die Kohlenstoffmatrix bestimmt werden.

Gelöst wird die Aufgabe der Erfindung durch das poröse Elektrodensubstrat gemäß Anspruch 1, das Verfahren gemäß Anspruch 8 und die Verwendung gemäß Anspruch 12.

Gegenstand der Erfindung ist ein poröses Elektrodensubstrat in Bahnform (Rollenware) umfassend ein Gebilde aus Kohlenstofffasern und einer Kohlenstoffmatrix, welche beispielsweise durch Imprägnieren der Bahn mit einer vorzugsweise wasserbasierten oder alkoholischen Dispersion von Kohlenstoffpartikeln, Bindersubstanzen und Dotierungsagenzien (zum Beispiel Metallpartikel oder Metalloxidpartikel, Porenbildnern) und anschließender Härtung bzw. Carbonisierung erzeugt wird.

Die spezifische Oberfläche, Porosität und Porenverteilung wird dabei erfindungsgemäß durch die Kohlenstoffmatrix bestimmt, vorzugsweise umfassend den Füllstofftyp, den Füllstoffgehalt und/oder die Temperatur bei der thermischen Behandlung.

Das Masseverhältnis von Bindersubstanzen zu Kohlenstoffpartikeln liegt vorzugsweise zwischen 1:10 und 10:1.

Porenbildner werden bevorzugt aus der Gruppe Ammoniumhydrogencarbonat, Ammoniumcarbonat, Lithiumcarbonat, Ammoniumoxalat, Ammoniumacetat, Oxalsäure, Azodicarbonsäurediamid, Azoisobutylnitril, Benzoylperoxid, Cellulosemehl, mikrokristalline Cellulose, Saccharose und Stärkemehl ausgewählt. Vorzugsweise ist im Gebilde aus Kohlenstofffasern oder Kohlenstoffprecursorfasern und der Kohlenstoffmatrix wenigstens ein Teil der Zwischenräume mit einem aktivierten Kohlenstoff mit hoher spezifischer Oberfläche sowie einem carbonisierten oder graphitierten Rückstand eines carbonisierbaren oder graphitierbaren Binders gefüllt.

Die BET-Messung ist ein Begriff für ein Analyseverfahren zur Größenbestimmung von Oberflächen, insbesondere von porösen Festkörpern, mittels Gasadsorption. Es ist eine Methode der Oberflächenchemie, mit welcher die massenbezogene spezifische Oberfläche aus experimentellen Daten errechnet wird.

Es ist bevorzugt, dass das Masseverhältnis zwischen dem carbonisierten oder graphitierten Rückstand und den Kohlenstoffpartikeln sowie dem aktivierten Kohlenstoff mit hoher spezifischer Oberfläche zwischen 1:10 und 10:1 liegt, und der carbonisierte oder graphitierte Rückstand zusammen mit den Kohlenstoffpartikeln sowie dem aktivierten Kohlenstoff mit hoher spezifischer Oberfläche einen Masseanteil zwischen 25 und 75% an der Elektrode ausmacht, die BET des Substrats 5 bis 250 m²/g und besonders bevorzugt 1 bis 100 m²/g beträgt, das poröse Elektrodensubstrat zwischen 0,1 und 0,4 mm dick ist und der elektrische Widerstand in z-Richtung < 25 mOhm cm², bevorzugt < 10 mOhm cm² beträgt.

Das Gebilde aus Kohlenstofffasern wird besonders bevorzugt ausgewählt aus der Gruppe Gelege, Papier, Gewebe und Vliesstoff. Die Dicke pro Gewebe oder Vliesstoff beträgt bevorzugt zwischen 0,1 und 0,6 mm.

Die Kohlenstoffpartikel bestehen besonders bevorzugt aus Acetylenruß, Ölruß, Gasruß, graphitiertem Ruß, gemahlenen Kohlenstofffasern, Carbon Nanotubes (CNTs), Kohlenstoffnanofasern, Kohlenstoffaerogelen, mesoporösem Kohlenstoff, Feinkorngraphit, Glaskohlenstoffpulver, expandiertem Graphit, gemahlenem expandiertem Graphit, Graphitoxid, Flockengraphit, Graphen, Graphenoxid, N-dotierten CNTs, Bor-dotierten CNTs, Fullerenen, Petrolkoks, Acetylenkoks, Anthrazitkoks, carbonisierten Mesophasenpechen und/oder dotiertem Diamant.

Bevorzugt besteht der carbonisierbare oder graphitierbare Binder aus Steinkohlenteerpechen, Phenolharzen, Benzoxazinharzen, Epoxidharzen, Furanharzen, Furfurylalkoholen, Vinylesterharzen und besonders bevorzugt aus Materialien, welche Heteroatome im Kohlenstoffgerüst aufweisen und im Zuge der Carbonisierung heteroatomdotierten Kohlenstoff erzeugen können, wie Melamin-Formaldehyd-Harze (MF), Harnstoff-Formaldehdyd-Harze (UF), Resorcinol-Formaldehyd (RF)-Harze, Acrylnitril-Butadien-Kautschuk, Cyanatesterharze, Bismaleimidharze, Polyurethanharze und/oder Polyacrylnitrile.

Es ist besonders bevorzugt, dass der Kohlenstoffanteil in Form von Kohlenstofffasern, carbonisiertem oder graphitierten Rückstand sowie den Kohlenstoffpartikeln und dem aktivierten Kohlenstoff mindestens 95 Gew. % und der Heteroatomanteil mindestens 1 Gew. % beträgt.

Die Porosität beträgt vorzugsweise, ausgedrückt durch das Verhältnis des offenen Volumens zur Summe aus offenem Volumen, Volumen der Kohlenstofffasern, und des Volumens, welches durch alle Feststoffe, umfassend carbonisierten oder graphitierten Rückstand sowie die Kohlenstoffpartikel und aktivierten Kohlenstoff, zwischen 15 und 97 Gew. %.

Poröser Kohlenstoff kann bevorzugt mit Polyvinylidenfluorid (PVDF) erzeugt werden.

Bevorzugt wurde das poröse Elektrodensubstrat zusätzlich imprägniert mit einem oder mehreren Imprägniermitteln und/oder dotiert mit einem oder mehreren Dotierungsmitteln.

Das Elektrodensubstrat ist vorzugsweise zusätzlich mit einer Schicht bestehend aus vollständig oder teilweise fluoriertem Polymer sowie aus leitfähigen Partikeln beschichtet.

Weiterer Gegenstand der Erfindung ist ein Verfahren zur Herstellung eines porösen Elektrodensubstrats in Bahnform (Rollenware), wobei ein Precursorgebilde carbonisiert wird und das dadurch entstandene Gebilde aus Kohlenstofffasern mit Kohlenstoffpartikeln, einem carbonisierbaren Binder und aktiviertem Kohlenstoff dispergiert, getrocknet bzw. gehärtet und unter Inertgasatmosphäre, vorzugsweise mit einem Inertgas wie beispielsweise Stickstoff oder Argon, in einem kontinuierlichen Ofen bei 800 - 3000 °C, bevorzugt bei 900 - 2000 °C carbonisiert wird.

Das Precursorgebilde besteht bevorzugt aus Kohlenstofffasern, Fasern der Gruppe Polyacrylnitril, oxidiertes Polyacrylnitril (PANOX), Novoloid (Phenolharzfasern), Cellulose, Celluloseacetat, Lignin, Polyaramid, Polyimid, Polyoxodiazole, Polyvinylalkohol, Polyamide oder Pechfasern.

Die verwendeten Kohlenstofffasern sind besonders bevorzugt Kurzschnittfasern, Stapelfasern oder Endlosfasern.

Der Kohlenstofffaseranteil im Gebilde beträgt vorzugsweise 10 bis 90 %, besonders bevorzugt 20 bis 80 %.

Imprägniert wird vorzugsweise mit einer wasserbasierten oder alkoholischen Dispersion.

Vorzugsweise umfasst das Imprägniermittel ein hydrophobes Polymer und der Anteil am Elektrodensubstrat beträgt zwischen 2 und 40 Gew. %.

In einer weiteren Ausführungsform wird das carbonisierte Substrat bevorzugt mit Fluorpolymer-Dispersionen (beispielsweise PTFE, PVDF, ETFE und/oder PFA) oder Polysiloxan-Dispersion imprägniert.

Es ist ferner bevorzugt, dass mit H₂-Inhibitoren imprägniert wird, darunter Nanopartikel von Au, Bi, Pb, Sn, Sb, In(III)-oxid, In(III)-salze, Bi(III)-oxid, Bi(III)-salze, Bi(OH)₃, In(OH)₃, Antimon(III)-oxid, Antimon(III)-salze, Blei und Bleisalze, Bleiacetat, Bleisulfat, Zinn(II)-oxid und Mo(II)salze.

Imprägnieren kann vorzugsweise durch Aufdampfen oder Plasmaabscheidung (PVD) bzw. durch galvanische oder stromlose Abscheidung von Au, Sn, Pb, Bi und/oder Sb erfolgen

Weiter bevorzugt ist die Dotierung mit Metallen und/oder Metalloxiden, darunter Mangan(III)salze, Manganocen, Cobaltocen, Mangan(III, IV)-oxide, nanoskaliges Bismutoxid (Bi₂O₃), Rutheniumsalze/Ruthenium(II)-oxid, RuO₂, Iridium(III)salze, Iridiumoxid, Metallpartikel und Metallnanopartikel, besonders bevorzugt Au, Sn, Pb, Bi, Ru, Ag, Rh, In, Sb, Ir, und/oder Pd, Polyoxometallate (POM), Co-Porphyrine, Iridiumoxid, Raney-Nickel, Bortrioxid, Borsäure, Borax, Borsäureester, Titandiborid, Sol-Gel-Dispersionen auf Basis von Alkoxiden aus der Gruppe Mn, Bi, Co, Ti und B, Molybdändisulfid und Mo(II)salze.

Die Dotierung erfolgt vorzugsweise durch Aufdampfen oder Plasmaabscheidung (PVD) oder galvanischer bzw. stromloser Abscheidung von Metallen und/oder Metalloxiden wie Co, Ir, Manganoxid und/oder Au, Bi, Sn, Pb, In, Sb.

Als Dispergiermittel werden für die Imprägnierdispersion bevorzugt Ligninsulfonate, Naphtalinsulfonat-Kondensate, Polyalkylphenylether, Polyethylenoxid-Polypropylenoxid-Copolymere, Polyacrylate und Polyvinylalkohle, sowie besonders bevorzugt N-haltige Dispergiermittel wie Polyvinylpyrrolidon, Polyethylenimin, Polyaminobenzolsulfonsäure, Polybenzylviologene oder Polydiallyldimethylammoniumchlorid verwendet.

Als Härter werden vorzugsweise Hexamethylentetramin, Ethylendiamin, Glutardialdehyd, Paraformaldehyd oder Terephtaldehyd eingesetzt.

In einer bevorzugten Ausführungsform werden mehrere imprägnierte Lagen des Elektrodensubstrats aufeinandergelegt und bei Temperaturen > 120 °C gehärtet. Anschließend ist eine Carbonisierung bei 900 bis 1800 °C besonders bevorzugt. Optional kann eine Oberflächenoxidation bei beispielsweise 450 °C für maximal 15 min in Luftatmosphäre und/oder unter Luftzufuhr erfolgen.

In einer weiteren bevorzugten Ausführungsform wird die Oberflächenoxidation chemisch mit beispielsweise Salpetersäure, Perchlorsäure, Perjodat, Permanganat, Cer(IV)-sulfat oder Wasserstoffperoxid durchgeführt.

Das Substrat wird bevorzugt nach dem Carbonisierungsschritt thermisch, mit beispielsweise Luft und/oder Sauerstoff und beispielsweise einer Temperatur von >250 °C, oder nasschemisch oxidiert.

Besonders bevorzugt wird das poröse Elektrodensubstrat in Redox Flow Batterien und/oder Lithium-Schwefel-Batterien und/oder Natrium-Schwefel-Batterien und/ oder Zink-Brom-Batterien und/oder Zink-Luft-Batterien und/oder Vanadium-Luft-Batterien und/oder Vanadium-Luft-Brennstoffzellen und/oder Polymerelektrolyt-Brennstoffzellen und/oder mikrobiellen Brennstoffzellen und/oder H₂/Cl₂-Brennstoffzellen und/oder H₂/Br₂-Brennstoffzellen und/oder PEM-Elektrolyseuren verwendet.

Bei Redox Flow Batterien wird vorzugsweise ein Laminat mit einem Stromkollektor (beispielsweise Graphitplatten oder Graphitcompound-Bipolarplatten) oder Ableiterfolie (beispielsweise Ti, Ni oder Graphitfolie) eingesetzt. Ferner bevorzugt sind einfache bzw. mehrfache Materiallagen oder die Verpressung vor dem Carbonisieren für Multilagen-Ausführungen.

Bei Lithium-Schwefel-Batterien und Natrium-Schwefel-Batterien wird bevorzugt mit Schwefel, Thiosulfat, Xanthogenaten und/oder Polysulfiden infiltriert.

Bei Zink-Luft-Batterien, Vanadium-Luft-Batterien und Brennstoffzellen wird vorzugsweise mit Fluorpolymeren oder Siloxanpolymeren hydrophobiert.

Da die spezifische Oberfläche, Porosität und Porenverteilung durch die Kohlenstoffmatrix (Füllmatrix) bzw. die Temperatur bei der thermischen Behandlung bestimmt werden kann, ist überraschend eine Anpassung an die verschiedenen Einsatzgebiete möglich.

Beispielsweise ist bei Redox Flow Batterien eine hohe BET, eine höhere katalytische Aktivität durch Heteroatome im C-Gitter und eine Dotierung mit anorganischen Oxiden und/oder Metallpartikeln gewünscht, bei Lithium-Schwefel-Batterien eine mittlere BET.

Die nachfolgenden Beispiele erläutern die Erfindung:

### Beispiel 1:

Eine Bahn Carbonfaserrohpapier (Flächenmasse 20 g/m²) hergestellt mittels Nassfliestechnik mittels Kurzschnitt-Carbonfasern (3mm - 12mm) wird mittels eines Foulards mit einer wässrigen Dispersion bestehend aus 50 kg Wasser, 0,75 kg Polyvinylpyrrolidon, 6,75 kg Acetylenruß, 0,75 kg aktiviertem Kohlenstoff (BET > 1000 m²/g), 0,75 kg 2-Aminopropanol, 0,1 kg Ammoniumhydrogencarbonat und 18,75 kg Resorcinol-Formaldehydharz-Dispersion imprägniert und in einem Durchlaufofen getrocknet bzw. gehärtet. Anschließend erfolgt eine Carbonisierung in Inertgasatmosphäre in einem kontinuierlichen Ofen bei 1400 °C.

### Beispiel 2 (nicht erfindungsgemäß)

Eine Rolle Carbonfaservlies (40 g/m²) hergestellt durch Carbonisierung eines wasserstrahlverfestigten Vlieses auf Basis von Polyacrylnitril- oder oxidierten Polyacrylnitrilstapelfasern (20 bis 80mm) wird auf einem Foulard mit einer wässrigen Dispersion bestehend aus 56 kg Wasser, 0,95 Polyvinylalkohol, 7,5 kg Acetylenruß (BET-Oberfläche 60 m²/g) und 20,65 kg Melamin-Formaldehydharz (40%) imprägniert und in einem Durchlaufofen getrocknet bzw. ausgehärtet. Anschließend erfolgt eine Carbonisierung in Inertgasatmosphäre in einem kontinuierlichen Ofen bei 1400 °C.

Die folgende Tabelle zeigt die Materialkennwerte für die Beispiele 1 und 2 mit einem Referenzmuster zum Vergleich. Zur Messung des Widerstands wurde eine 2-Punktmessung bei 100 N/cm² Belastung durchgeführt.

| | Dicke | Porosität | Widerstand | Elementanalyse | | BET |
|---|---|---|---|---|---|---|
| | (µm) | (%) | (mOhm cm²) | CO | N | (m²/g) |
| Referenz GDL 10AA | 370 | 87,8 | 4,2 | 98,5 | 0,3 | 0,8 |
| | | | | 0,1 | | |
| Beispiel 1 | 210 | 91,2 | 6,2 | 97,8 | 0,9 | 70 |
| | | | | 0,6 | | |
| Beispiel 2(*) | 380 | 88,7 | 9,8 | 97,5 | 1,4 | 34 |
| | | | | 0,1 | | |

| | | | | | | |
|---|---|---|---|---|---|---|
| (*) nicht erfindungsgemäß | | | | | | |

Zu Bewertung der elektrochemischen Aktivität wurden Zyklovoltammetrie-Messungen von unbehandelten Elektrodenmaterialien in 1 mM Fe(CN)₆^{3-/4-} in 0.1 M Kaliumchloridlösung durchgeführt.

Ein idealreversibles Redoxpaar ergibt eine Separation zwischen dem Oxidations-(Eₚ^{ox}) und Reduktionspeak (Eₚ^{red}) von 60 mV (A J Bard, L. M. Faulkner, Hrsg. Electrochemical Methods: Fundamentals and Applications, Wiley, 2001). Die deutlich geringeren Peakseparationen bei den Materialien aus Beispiel 1 und 2 im Vergleich zum Referenzmaterial belegen die signifikant verbesserte elektrochemische Kinetik der Materialien aus Ausführungsbeispiel 1 und dem nicht erfindungsgemäßen Beispiel 2.

| | Eₚ^{ox} - Eₚ^{red} |
|---|---|
| Referenz GDL 10AA | 322 mV |
| Beispiel 1 | 70 mV |
| Beispiel 2(*) | 100 mV |
| (*) nicht erfindungsgemäß | |

## Patentansprüche

1. Poröses Elektrodensubstrat in Bahnform umfassend ein Gebilde aus Kohlenstofffasern und einer Kohlenstoffmatrix, wobei die Kohlenstoffmatrix aktivierten Kohlenstoff mit einer hohen spezifischen Oberfläche, deren Wert durch BET-Messung mehr als 1000 m²/g beträgt, carbonisierten oder graphitierten Rückstand eines carbonisierbaren oder graphitierbaren Binders, und Kohlenstoffpartikel enthält, wobei die spezifische Oberfläche, Porosität und Porenverteilung durch die Kohlenstoffmatrix bestimmt werden.

2. Poröses Elektrodensubstrat nach Anspruch 1, **dadurch gekennzeichnet, dass** das Masseverhältnis zwischen dem carbonisierten oder graphitierten Rückstand und den Kohlenstoffpartikeln sowie dem aktivierten Kohlenstoff zwischen 1:10 und 10:1 liegt, und der carbonisierte oder graphitierte Rückstand zusammen mit den Kohlenstoffpartikeln sowie dem aktivierten Kohlenstoff einen Masseanteil zwischen 25 und 75 % an einem Elektrodensubstrat ausmacht, der durch BET-Messung ermittelte Wert des Substrats 5 bis 250 m²/g beträgt, das poröse Elektrodensubstrat zwischen 0,1 und 0,4 mm dick ist und der elektrische Widerstand < 25 mOhm cm² beträgt.

3. Poröses Elektrodensubstrat nach einem oder mehrerer der vorangehenden Ansprüche, **dadurch gekennzeichnet, dass** die Kohlenstoffpartikel aus Acetylenruß, Ölruß, Gasruß, graphitiertem Ruß, gemahlenen Kohlenstofffasern, Carbon Nanotubes (CNTs), Kohlenstoffnanofasern, Kohlenstoffaerogelen, mesoporösem Kohlenstoff, Feinkorngraphit, Glaskohlenstoffpulver, expandiertem Graphit, gemahlenem expandiertem Graphit, Graphitoxid, Flockengraphit, Graphen, Graphenoxid, N-dotierten CNTs, Bor-dotierten CNTs, Fullerenen, Petrolkoks, Acetylenkoks, Anthrazitkoks, carbonisierten Mesophasenpechen und/oder dotiertem Diamant bestehen.

4. Poröses Elektrodensubstrat nach einem oder mehrerer der vorangehenden Ansprüche, **dadurch gekennzeichnet, dass** der carbonisierbare oder graphitierbare Binder aus Steinkohlenteerpechen, Phenolharzen, Benzoxazinharzen, Epoxidharzen, Furanharzen, Furfurylalkoholen, Vinylesterharzen, Melamin-Formaldehyd-Harzen (MF), Harnstoff-Formaldehdyd-Harzen (UF), Resorcinol-Formaldehyd (RF)-Harzen, Acrylnitril-Butadien-Kautschuk, Cyanatesterharzen, Bismaleimidharzen, Polyurethanharzen und/oder Polyacrylnitrilen besteht.

5. Poröses Elektrodensubstrat nach einem oder mehrerer der vorangehenden Ansprüche, **dadurch gekennzeichnet, dass** der Kohlenstoffanteil in Form von Kohlenstofffasern, carbonisiertem oder graphitierten Rückstand sowie den Kohlenstoffpartikeln und dem aktivierten Kohlenstoff mindestens 95 Gew. % und der Heteroatomanteil mindestens 1 Gew. % beträgt.

6. Poröses Elektrodensubstrat nach einem oder mehrerer der vorangehenden Ansprüche, **dadurch gekennzeichnet, dass** es zusätzlich imprägniert wurde mit einem oder mehreren Imprägniermitteln und/oder dotiert mit einem oder mehreren Dotierungsmitteln

7. Poröses Elektrodensubstrat nach einem oder mehrerer der vorangehenden Ansprüche, **dadurch gekennzeichnet, dass** das Elektrodensubstrat zusätzlich mit einer Schicht bestehend aus vollständig oder teilweise fluoriertem Polymer sowie aus leitfähigen Partikeln beschichtet ist.

8. Verfahren zur Herstellung eines porösen Elektrodensubstrats in Bahnform nach einem oder mehrerer der Ansprüche 1 bis 7, **dadurch gekennzeichnet, dass** ein Precursorgebilde carbonisiert wird und das dadurch entstandene Gebilde aus Kohlenstofffasern mit Kohlenstoffpartikeln, einem carbonisierbaren Binder und aktiviertem Kohlenstoff dispergiert, getrocknet bzw. gehärtet und unter Inertgasatmosphäre in einem kontinuierlichen Ofen bei 800-3000°C carbonisiert wird.

9. Verfahren zur Herstellung eines porösen Elektrodensubstrats nach Anspruch 8, **dadurch gekennzeichnet, dass** der Kohlenstofffaseranteil im Gebilde 10 bis 90 %, vorzugsweise 20 bis 80 % beträgt.

10. Verfahren zur Herstellung eines porösen Elektrodensubstrats nach Anspruch 8 oder 9, **dadurch gekennzeichnet, dass** es zusätzlich imprägniert wird mit einem Imprägniermittel, wobei das Imprägniermittel ein hydrophobes Polymer umfasst und der Anteil am Elektrodensubstrat zwischen 2 und 40 Gew. % beträgt oder wobei das Imprägniermittel ausgewählt wird aus der Gruppe bestehend aus H₂-Inhibitoren, Metallen, Metallsalzen und Metalloxiden.

11. Verfahren zur Herstellung eines porösen Elektrodensubstrats nach einem oder mehrerer der vorangehenden Ansprüche 8 bis 10, **dadurch gekennzeichnet, dass** das Substrat nach dem Carbonisierungsschritt thermisch oder nasschemisch oxidiert wird.

12. Verwendung des porösen Elektrodensubstrats nach einem oder mehrerer der vorangehenden Ansprüche 1 bis 7 in Redox Flow Batterien und/oder Lithium-Schwefel-Batterien und/oder Natrium-Schwefel-Batterien Z und/oder Zink-Brom-Batterien und/oder Zink-Luft-Batterien und/oder Vanadium-Luft-Batterien und/oder Brennstoffzellen mikrobiellen Brennstoffzellen, H₂/Cl₂-Brennstoffzellen, H₂/Br₂-Brennstoffzellen und/oder PEM-Elektrolyseuren.

## Claims

1. Porous electrode substrate in web form comprising a structure made of carbon fibres and a carbon matrix, wherein the carbon matrix contains activated carbon which has a high specific surface, the BET measurement value of which is more than 1000 m²/g, carbonised or graphitised residue of a binder which can be carbonised or graphitised, and carbon particles, wherein the specific surface, porosity and pore distribution are determined by the carbon matrix.

2. Porous electrode substrate according to claim 1, **characterised in that** the mass ratio between the carbonised or graphitised residue and the carbon particles and the activated carbon is between 1:10 and 10:1, and the carbonised or graphitised residue, together with the carbon particles and the activated carbon, constitutes a mass proportion of between 25 and 75% of an electrode substrate, the value of the substrate determined by BET measurement is 5 to 250 m²/g, the porous electrode substrate is between 0.1 and 0.4 mm thick and the electrical resistance is <25 mOhm cm².

3. Porous electrode substrate according to one or more of the preceding claims, **characterised in that** the carbon particles consist of acetylene black, oil black, gas black, graphitised black, milled carbon fibres, carbon nanotubes (CNTs), carbon nanofibres, carbon aerogels, mesoporous carbon, fine-grained graphite, glassy carbon powder, expanded graphite, milled expanded graphite, graphite oxide, flake graphite, graphene, graphene oxide, N-doped CNTs, boron-doped CNTs, fullerenes, petroleum coke, acetylene coke, anthracite coke, carbonised mesophase pitches and/or doped diamond.

4. Porous electrode substrate according to one or more of the preceding claims, **characterised in that** the binder which can be carbonised or graphitised consists of coal tar pitches, phenol resins, benzoxazine resins, epoxy resins, furan resins, furfuryl alcohols, vinyl ester resins, melamine-formaldehyde resins (MF), urea-formaldehyde resins (UF), resorcinol-formaldehyde (RF) resins, acrylonitrile butadiene rubber, cyanate ester resins, bismaleimide resins, polyurethane resins and/or polyacrylonitriles.

5. Porous electrode substrate according to one or more of the preceding claims, **characterised in that** the proportion of carbon in the form of carbon fibres, carbonised or graphitised residue, and of the carbon particles and the activated carbon is at least 95 wt.%, and the proportion of heteroatoms is at least 1 wt.%.

6. Porous electrode substrate according to one or more of the preceding claims, **characterised in that** it has additionally been impregnated with one or more impregnating agents and/or doped with one or more dopants.

7. Porous electrode substrate according to one or more of the preceding claims, **characterised in that** the electrode substrate is additionally coated with a layer consisting of completely or partially fluorinated polymer and of conductive particles.

8. Method for producing a porous electrode substrate in web form according to one or more of claims 1 to 7, **characterised in that** a precursor structure is carbonised and the resultant carbon fibre structure is dispersed, dried and hardened using carbon particles, a binder which can be carbonised and activated carbon, and is carbonised at 800-3000°C under an inert gas atmosphere in a continuous furnace.

9. Method for producing a porous electrode substrate according to claim 8, **characterised in that** the proportion of carbon fibre in the structure is 10 to 90%, preferably 20 to 80%

10. Method for producing a porous electrode substrate according to either claim 8 or claim 9, **characterised in that** it is additionally impregnated with an impregnating agent, the impregnating agent comprising a hydrophobic polymer and the proportion of electrode substrate being between 2 and 40 wt.%, or the impregnating agent being selected from the group consisting of H₂ inhibitors, metals, metal salts and metal oxides.

11. Method for producing a porous electrode substrate according to one or more of the preceding claims 8 to 10, **characterised in that** the substrate is thermally or wet-chemically oxidised after the carbonisation step.

12. Use of the porous electrode substrate according to one or more of the preceding claims 1 to 7 in redox flow batteries and/or lithium-sulfur batteries and/or sodium-sulfur batteries Z and/or zinc-bromine batteries and/or zinc-air batteries and/or vanadium-air batteries and/or fuel cells, microbial fuel cells, H₂/Cl₂ fuel cells, H₂/Br₂ fuel cells and/or PEM electrolysers.

## Revendications

1. Substrat d'électrode poreux en forme de feuille comprenant une structure de fibres de carbone et une matrice de carbone, la matrice de carbone contenant du carbone actif ayant une grande surface spécifique dont la valeur par mesure BET est supérieure à 1 000 m²/g, un résidu carbonisé ou graphitisé d'un liant pouvant être carbonisé ou graphitisé et des particules de carbone, la surface spécifique, la porosité et la répartition de pores étant déterminées par la matrice de carbone.

2. Substrat d'électrode poreux selon la revendication 1, **caractérisé en ce que** le rapport massique entre le résidu carbonisé ou graphitisé et les particules de carbone et le carbone actif est compris entre 1:10 et 10:1, et le résidu carbonisé ou graphitisé, conjointement avec les particules de carbone et le carbone actif, constitue une fraction massique comprise entre 25 et 75 % d'un substrat d'électrode, la valeur du substrat déterminée par mesure BET est comprise entre 5 et 250 m²/g, l'épaisseur du substrat d'électrode poreux est comprise entre 0,1 et 0,4 mm et la résistance électrique est inférieure à 25 mOhm cm².

3. Substrat d'électrode poreux selon l'une ou plusieurs des revendications précédentes, **caractérisé en ce que** les particules de carbone sont constituées de noir de carbone acétylène, de noir de carbone pétrolier, de noir de carbone gazeux, de noir de carbone graphitisé, de fibres de carbone broyées, de nanotubes de carbone (NTC), de nanofibres de carbone, d'aérogels de carbone, de carbone mésoporeux, de graphite à grains fins et de poudre de carbone vitreux, de graphite expansé, de graphite expansé broyé, d'oxyde de graphite, de graphite en flocons, de graphène, d'oxyde de graphène, de NTC dopés N, de NTC dopés au bore, de fullerènes, de coke de pétrole, de coke d'acétylène, de coke d'anthracite, de brai de mésophase carbonisé et/ou de diamant dopé.

4. Substrat d'électrode poreux selon l'une ou plusieurs des revendications précédentes, **caractérisé en ce que** le liant pouvant être carbonisé ou graphitisé est constitué de brai de goudron de houille, de résines phénoliques, de résines de benzoxazine, de résines d'époxyde, de résines de furannes, d'alcools furfuryliques, de résines de vinylester et de résines de mélamine formaldéhyde (MF), de résines d'urée-formaldéhyde (UF), de résines de résorcinol-formaldéhyde (RF), de caoutchouc acrylonitrile-butadiène, de résines d'ester de cyanate, de résines de bismaléimide, de résines de polyuréthane et/ou de polyacrylonitriles.

5. Substrat d'électrode poreux selon l'une ou plusieurs des revendications précédentes, **caractérisé en ce que** la teneur en carbone sous forme de fibres de carbone, de résidu carbonisé ou graphitisé, ainsi que de particules de carbone et de carbone actif est d'au moins 95 % en poids et la teneur en hétéroatome est d'au moins 1 % en poids.

6. Substrat d'électrode poreux selon l'une ou plusieurs des revendications précédentes, **caractérisé en ce qu'**il a été imprégné en outre d'un ou de plusieurs agents d'imprégnation et/ou dopé d'un ou de plusieurs dopants

7. Substrat d'électrode poreux selon l'une ou plusieurs des revendications précédentes, **caractérisé en ce que** le substrat d'électrode est en outre revêtu d'une couche constituée d'un polymère entièrement ou partiellement fluoré ainsi que de particules conductrices.

8. Procédé de préparation d'un substrat d'électrode poreux en forme de feuille selon l'une ou plusieurs des revendications 1 à 7, **caractérisé en ce qu'**une structure précurseur est carbonisée et la structure résultante en fibres de carbone est dispersée, séchée ou durcie à l'aide de particules de carbone, d'un liant carbonisable et de carbone actif, et carbonisée dans une atmosphère de gaz inerte dans un four continu à 800-3000 °C.

9. Procédé de préparation d'un substrat d'électrode poreux selon la revendication 8, **caractérisé en ce que** la teneur en fibres de carbone dans la structure est de 10 à 90 %, de préférence de 20 à 80 %.

10. Procédé de préparation d'un substrat d'électrode poreux selon la revendication 8 ou 9, **caractérisé en ce que** l'on l'imprègne en outre d'un agent d'imprégnation, l'agent d'imprégnation comprenant un polymère hydrophobe et la proportion de substrat d'électrode étant comprise entre 2 et 40 % en poids ou l'agent d'imprégnation étant choisi dans le groupe constitué d'inhibiteurs H₂, de métaux, de sels métalliques et d'oxydes métalliques.

11. Procédé de préparation d'un substrat d'électrode poreux selon l'une ou plusieurs des revendications précédentes 8 à 10, **caractérisé en ce que** le substrat est oxydé thermiquement ou par voie chimique humide après l'étape de carbonisation.

12. Utilisation du substrat d'électrode poreux selon l'une ou plusieurs des revendications précédentes 1 à 7 dans des batteries à flux redox et/ou des batteries lithium-soufre et/ou des batteries sodium-soufre Z et/ou des batteries zinc-brome et/ou des batteries zinc-air et/ou des batteries vanadium-air et/ou des piles à combustible microbiennes, des piles à combustible H₂/Cl₂, des piles à combustible H₂/Br₂ et/ou des électrolyseurs PEM.
